# EUROPÄISCHE PATENTSCHRIFT

(11) **EP 4 136 014 B1**
(45) Veröffentlichungstag und Bekanntmachung des Hinweises auf die Patenterteilung: **03.09.2025**
(21) Anmeldenummer: 21716286.6
(22) Anmeldetag: 25.03.2021
(51) Int. Cl.: B62D 53/00, B62D 65/18, B61L 25/02, G05D 1/00, B65G 65/00, B61L 3/06, B61L 25/04

(54) **SYSTEM UMFASSEND EINEN ROUTENZUG UND MINDESTENS EINE STATIONÄRE ÜBERNAHMESTATION**
SYSTEM COMPRISING A TUGGER TRAIN AND AT LEAST ONE STATIONARY TRANSFER STATION
SYSTÈME COMPRENANT UN TRAIN TRACTEUR ET AU MOINS UNE STATION DE TRANSFERT FIXE

(30) Priorität: 15.04.2020 DE 102020110259
(43) Veröffentlichungstag der Anmeldung: 22.02.2023
(73) Patentinhaber: LR Intralogistik GmbH, 84109 Wörth a. d. Isar (DE)
(72) Erfinder: KOLLMANNSBERGER, Josef, 84106 Volkenschwand (DE)
(74) Vertreter: Patentship Patentanwaltgesellschaft
(86) Internationale Anmeldenummer: PCT/EP2021/057739
(87) Internationale Veröffentlichungsnummer: WO 2021/209241

(56) Entgegenhaltungen:
- EP-A1- 3 150 522
- EP-A2- 1 637 477
- US-A- 4 944 357
- US-A- 5 664 929
- US-A1- 2012 059 545
- US-A1- 2012 303 190

## Beschreibung

Die Erfindung betrifft ein System umfassend einen Routenzug, der ein Zugfahrzeug und mindestens einen Routenzuganhänger aufweist, und mindestes eine stationäre Übernahmestation zur Übergabe von Lasten zwischen dem Routenzuganhänger und der stationären Übernahmestation, wobei sich der Routenzuganhänger zur Lastübergabe in einer definierten Umschlagposition relativ zur stationären Übernahmestation befindet.

Für den werksinternen Transport von Lasten, beispielsweise Paletten oder Gitterboxen zur Aufnahme von Ladungen, werden in zunehmendem Umfang Routenzüge eingesetzt, deren Routenzuganhänger von einem Zugfahrzeug zu den gewünschten Übernahmestationen verfahren werden.

An den gewünschten Übernahmestation muss sich der Routenzuganhänger in Fahrzeuglängsrichtung in einer definierten Umschlagposition relativ zur stationären Übernahmestation befinden, um eine Last zwischen dem Routenzuganhänger und der stationären Übernahmestation exakt übergeben zu können, d.h. von dem Routenzuganhänger auf die stationäre Übernahmestation zu übergeben oder von stationären Übernahmestation auf den Routenzuganhänger zu übergeben.

Um den Routenzug mit dem entsprechenden Routenzuganhänger an einer stationären Übernahmestation in Fahrzeuglängsrichtung richtig zu positionieren, ist es bekannt, entsprechende Positioniersysteme zu verwenden. Bei Routenzügen, die von einem Fahrer bedient werden, ist es bekannt, zur Positionierung des Routenzuganhängers an einer Übernahmestationen an dem Routenzug einen Laserpointer vorzusehen, der einen Lichtpunkt erzeugt, wobei der Laserpointer mit Markierungspunkten auf der Fahrbahn zusammenwirkt. Bei einem derartigen Positioniersystem positioniert der Fahrer des Routenzugs das Zugfahrzeug des Routenzugs manuell derart, dass der von dem Laserpointer erzeugte Lichtpunkt auf den entsprechenden Markierungspunkt auf der Fahrbahn zeigt.

Weiterhin sind zur Positionierung des Routenzuganhängers in Fahrzeuglängsrichtung an einer stationären Übernahmestation Positioniersysteme bekannt, die ein Lesegerät und von dem Lesegerät erfasste Magnetstreifen an der Fahrbahn aufweisen, sowie Positioniersysteme bekannt, die Laserscanner und von dem Laserscanner erfasste Reflektoren aufweisen.

Sofern der Routenzug autonom und somit fahrerlos betrieben ist, ist aufgrund des automatisierten Fahrbetriebs des Routenzugs eine manuelle Positionierung des Routenzuganhängers in Fahrzeuglängsrichtung an der Übernahmestation nicht möglich. Bekannte Positioniersysteme mit Laserscannern und Reflektoren haben sich bei autonom betriebenen Routenzügen als zu ungenau erwiesen, um eine exakte Übergabe der Last in der Umschlagposition zu ermöglichen. Bekannte Positioniersysteme mit Magnetstreifen an der Fahrbahn erfordern einen aufwändigen Einbau der Markierungen in der Fahrbahn und führen somit zu hohen Kosten.

Aus der EP 3 150 522 A1 ist ein gattungsgemäßes System mit den Merkmalen des Oberbegriffs des Patentanspruchs 1 bekannt.

Die US 2012/059545 A1 offenbart ein automatisch geführtes Fahrzeug und ein Verfahren zur Antriebssteuerung des Fahrzeugs, das eine Positionierung des Fahrzeugs neben einem Förderband mit hoher Genauigkeit ermöglicht.

Der vorliegenden Erfindung liegt die Aufgabe zugrunde, ein System der eingangs genannten Gattung zur Verfügung zu stellen, das eine Positionierung des Routenzuganhängers in Fahrzeuglängsrichtung an einer stationären Übernahmestation mit hoher Genauigkeit und geringen Kosten ermöglicht.

Diese Aufgabe wird erfindungsgemäß dadurch gelöst, dass der Routenzuganhänger zwei in Fahrzeuglängsrichtung des Routenzuganhängers voneinander beabstandet angeordnete Lichtschranken aufweist, die an dem Routenzuganhänger jeweils mit einer in Querrichtung des Routenzuganhängers ausgerichteten Erfassungsrichtung angeordnet sind, und die stationäre Übernahmestation mit einem mit den Lichtschranken zusammenwirkender Reflektor versehen ist, wobei die Lichtschranken mit einer Fahrsteuerung des Routenzugs in Wirkverbindung stehen und die Fahrsteuerung derart ausgebildet ist, dass mittels der von den Lichtschranken an dem Reflektor reflektierten Lichtsignale der Routenzuganhänger an der stationären Übernahmestation in der definierten Umschlagposition angehalten wird.

Die beiden Lichtschranken an dem Routenzuganhänger und der Reflektor an der stationären Übernahmestation bilden somit eine optisches Positioniersystem, mit dem der Routenzuganhänger an der stationären Übernahmestation in Fahrzeuglängsrichtung positioniert wird. Erfindungsgemäß wird somit mit der an dem Routenzuganhänger angeordneten Lichtschranken beim Vorbeifahren des Routenzuganhängers an der stationären Übernahmestation der an der stationären Übernahmestation angeordnete Reflektor passiert und mittels der von den Lichtschranken an dem Reflektor reflektierten Lichtsignale durch den Eingriff auf die Fahrsteuerung der Routenzuganhänger an der stationären Übernahmestation in der definierten Umschlagposition angehalten. Ein derartiges optisches Positioniersystem, das zwei Lichtschranken an dem Routenzuganhänger und einen Reflektor an der stationären Übernahmestation aufweist, ermöglicht bei geringem Kostenaufwand eine exakte Positionierung des Routenzuganhängers an der Übernahmestation in der definierten Umschlagposition für eine Lastübergabe.

Gemäß einer vorteilhaften Ausführungsform der Erfindung ist der Reflektor an einer dem Routenzuganhänger zugewandten Stirnseite der stationären Übernahmestation angeordnet und erstreckt sich entlang der dem Routenzuganhänger zugewandten Stirnseite der stationären Übernahmestation. Dadurch wird in einfacher Weise erzielt, dass die beiden Lichtschranken an dem Routenzuganhänger, die mit einer in Querrichtung des Routenzuganhängers ausgerichteten Erfassungsrichtung am Routenzuganhänger angeordnet sind, für die Positionierung des Routenzuganhängers an der Übernahmestation in Fahrzeuglängsrichtung an dem Reflektor reflektierte Lichtsignale empfangen können.

Die Länge des Reflektors ist gemäß einer vorteilhaften Ausführungsform der Erfindung größer als der Abstand der beiden Lichtschranken in Fahrzeuglängsrichtung des Routenzuganhängers. Dies ermöglicht es, dass in der definierten Umschlagposition beide Lichtschranken ein an dem Reflektor reflektiertes Lichtsignal empfangen, wodurch eine exakte Positionierung des Routenzuganhängers in Fahrzeuglängsrichtung an der Übernahmestation ermöglicht wird.

Gemäß einer vorteilhaften Ausgestaltungsform der Erfindung ist die Länge des Reflektors maximal 20% größer als der Abstand der beiden Lichtschranken in Fahrzeuglängsrichtung des Routenzuganhängers ist. Dies führt zu einer weiteren Erhöhung der Genauigkeit der Positionierung des Routenzuganhängers in Fahrzeuglängsrichtung an der Übernahmestation.

Gemäß einer vorteilhaften Ausführungsform der Erfindung sind die Lichtschranken jeweils als Reflexionslichtschranke ausgebildet, die einen Lichtstrahlensender und einen Lichtstrahlenempfängersensor aufweisen. Die an dem Routenzuganhänger angeordneten Lichtschranken können somit jeweils das mittels des eigenen Lichtstrahlensenders ausgesendete und an dem an der Übernahmestation angeordneten Reflektor reflektierte Lichtsignal mittels des eigenen Lichtstrahlenempfängersensors empfangen, so dass von jeder Lichtschranke ein Signal erzeugt werden kann, wenn sich die entsprechende Lichtschranke vor dem an der Übernahmestation angeordneten Reflektor befindet.

Vorteilhafterweise sind gemäß einer Weiterbildung der Erfindung an der in Fahrtrichtung des Routenzuganhängers linken Seite und rechten Seite des Routenzuganhängers jeweils zwei Lichtschranken angeordnet. Dadurch ist der Routenzug universal einsetzbar und kann für eine Lastübergabe zur linken Seite und zur rechten Seite eingesetzt werden.

Gemäß einer vorteilhaften Ausführungsform der Erfindung ist die Fahrsteuerung derart ausgebildet, dass bei Erfassen des an dem Reflektor reflektierten Lichtsignals der ersten, in Fahrtrichtung des Routenzugs vorne liegenden Lichtschranke die Fahrgeschwindigkeit des Routenzugs reduziert wird. Dies ermöglicht es, dass der Routenzug mit einer vorgegebenen Fahrgeschwindigkeit die stationäre Übernahmestation anfahren kann. Sobald der Reflektor an der Übernahmestation in den Erfassungsbereich und somit das Sichtfeld der in Fahrtrichtung vorne liegenden ersten Lichtschranke gelangt, wird die Fahrgeschwindigkeit des Routenzugs verringert, so dass der Routenzug mit einer verringerten Fahrgeschwindigkeit weiterfährt.

Gemäß einer Weiterbildung der Erfindung ist die Fahrsteuerung derart ausgebildet, dass bei Erfassen des an dem Reflektor reflektierten Lichtsignals der zweiten, in Fahrtrichtung des Routenzugs hinten liegenden Lichtschranke der Routenzug in den Stillstand abgebremst wird. Sobald der Reflektor an der Übernahmestation in den Erfassungsbereich und somit das Sichtfeld der in Fahrtrichtung hinten liegenden zweiten Lichtschranke gelangt, wird der Routenzug von der verringerten Fahrgeschwindigkeit in den Stillstand abgebremst und somit gestoppt. Dadurch kann der Routenzuganhänger in einfacher Weise in der definierten Umschlagposition, in der der Reflektor an der Übernahmestation in den Erfassungsbereichen und somit den Sichtfeldern beider Lichtschranken ist, exakt angehalten und gestoppt werden.

Gemäß einer Weiterbildung der Erfindung ist die Fahrsteuerung derart ausgebildet, dass bei Nicht-Erfassen des an dem Reflektor reflektierten Lichtsignals der ersten, in Fahrtrichtung des Routenzugs vorne liegenden Lichtschranke eine Korrektur der Position des Routenzugs durch eine Rückwärtsfahrt des Routenzugs erfolgt, bis von beiden Lichtschranken ein an dem Reflektor reflektiertes Lichtsignal erfasst wird. Hierdurch wird es in einfacher Weise ermöglicht, die Position des Routenzuganhängers zu korrigieren, falls sich der Bremsweg des Routenzuganhängers aufgrund äußerer Einflüsse oder Verschleiß derart verlängert, dass die erste, in Fahrtrichtung des Routenzugs vorne liegenden Lichtschranke über den Reflektor an der Übernahmestation hinaus fährt.

Der Routenzug kann manuell durch einen Fahrer betrieben sein. Besondere Vorteile ergeben sich, wenn der Routenzug autonom und somit fahrerlos betrieben ist. Für den autonomen Routenzug muss bei der Erfindung nur eine bestimmte Fahrspur vorgegeben werden, gemäß der der Routenzug in einem definierten seitlichen Abstand entlang der Übernahmestationen vorbeifährt. Die jeweiligen Routenzuganhänger finden hierbei mit den beiden Lichtschranken an dem Routenzuganhänger und den Reflektoren an den Übernahmestationen die definierten Umschlagpositionen an den jeweiligen Übernahmestationen selbst und halten an diesen exakt an. Bei einem autonomen Routenzug kann das Zugfahrzeug als fahrerlos und automatisiert betriebener Schlepper ausgebildet sein oder alternativ von einem fahrerlosen Transportsystem, einem sogenannten FTS, gebildet sein.

Gemäß einer bevorzugten Weiterbildung der Erfindung weist der Routenzuganhänger und/oder die Übernahmestation eine Fördereinrichtung zur Lastübergabe einer Last auf. Dadurch kann der Routenzuganhänger mittels der entsprechenden Fördereinrichtung eine Last automatisch an die Übernahmestation übergeben oder von der Übernahmestation aufnehmen, wodurch bei einem autonomen Routenzug ein vollautomatischer Betrieb erzielt wird. Die Fördereinrichtungen können als motorisch angetriebene Rollenbahn, als Bandförderer oder als Kettenförderer ausgebildet sein.

Die Aufgabe wird ebenfalls durch ein Verfahren zum Betrieb eines erfindungsgemäßen Systems gelöst, bei dem von dem Routenzug mit einer vorgegebenen Fahrgeschwindigkeit die stationäre Übernahmestation angefahren wird, bei Erfassen des an dem Reflektor reflektierten Lichtsignals der ersten, in Fahrtrichtung des Routenzugs vorne liegenden Lichtschranke die Fahrgeschwindigkeit des Routenzugs reduziert wird und bei zusätzlichem Erfassen des an dem Reflektor reflektierten Lichtsignals der zweiten, in Fahrtrichtung des Routenzugs hinten liegenden Lichtschranke der Routenzug in den Stillstand abgebremst wird. Bei dem erfindungsgemäßen Verfahren wird somit ein erstes Bremssignal erzeugt, wenn der Reflektor an der Übernahmestation in den Erfassungsbereich und somit das Sichtfeld der in Fahrtrichtung vorne liegenden ersten Lichtschranke gelangt und die erste Lichtschranke ihr an dem Reflektor reflektiertes Lichtsignal empfängt. Mit dem ersten Bremssignal wird die Fahrtgeschwindigkeit des Routenzugs verringert, so dass der Routenzuganhänger mit reduzierter Fahrgeschwindigkeit an dem an der Übernahmestation angeordnete Reflektor entlangfährt. Bei dem erfindungsgemäßen Verfahren wird weiterhin ein zweites Bremssignal erzeugt, wenn der Reflektor an der Übernahmestation in den Erfassungsbereich und somit das Sichtfeld der in Fahrtrichtung hinten liegenden zweiten Lichtschranke gelangt und die zweite Lichtschranke ihr an dem Reflektor reflektiertes Lichtsignal empfängt. Mit dem zweiten Bremssignal wird der Routenzug in den Stillstand abgebremst und somit gestoppt. Mit dem erfindungsgemäßen Verfahren kann der Routenzuganhänger in einfacher Weise in der definierten Umschlagposition, in der der Reflektor an der Übernahmestation in den Erfassungsbereichen und somit den Sichtfelder beider Lichtschranken ist, exakt angehalten und gestoppt werden.

Gemäß einer Weiterbildung der Erfindung wird bei einem anschließenden Nicht-Erfassen des an dem Reflektor reflektierten Lichtsignals der ersten, in Fahrtrichtung des Routenzugs vorne liegenden Lichtschranke eine Korrektur der Position des Routenzugs durch eine Rückwärtsfahrt des Routenzugs erfolgt, bis von beiden Lichtschranken ein an dem Reflektor reflektiertes Lichtsignal erfasst wird. Hierdurch wird es in einfacher Weise ermöglicht, die Position des Routenzuganhängers zu korrigieren, falls sich der Bremsweg des Routenzuganhängers nach dem zweiten Bremssignal aufgrund äußerer Einflüsse oder Verschleiß derart verlängert, dass die erste, in Fahrtrichtung des Routenzugs vorne liegenden Lichtschranke über den Reflektor an der Übernahmestation hinaus fährt. Durch die in Fahrzeuglängsrichtung des Routenzuganhängers beabstandete Anordnung der beiden Lichtschranken und die Reihenfolge der von den beiden Lichtschranken empfangenen reflektierten Lichtsignale kann hierbei die Fahrtrichtung des Routenzuganhängers bestimmt werden, mit welcher der Routenzuganhänger die Übernahmestation anfährt und dementsprechend die entsprechende Fahrtrichtung bestimmt werden, in welcher der Routenzuganhänger korrigiert werden muss, falls eine Lichtschranke nach Erzeugen des zweiten Bremssignals über den an der Übernahmestation angeordneten Reflektor hinausfährt.

Die Erfindung weist eine Reihe von Vorteilen auf.

Das erfindungsgemäße optische Positioniersystem, das aus zwei Lichtschranken an dem Routenzuganhänger und einen Reflektor an der Übernahmestation besteht, weist eine einfachen und kostengünstigen Aufbau auf und ist ausfallsicherer als ein Positioniersystem, das aus einem Lesegerät und von dem Lesegerät erfasste Magnetstreifen an der Fahrbahn umfasst, sowie ausfallsicherer als ein Positioniersysteme, das einen Laserscanner und von dem Laserscanner erfasste Reflektoren umfasst.

Darüber stellt der an der Übernahmestation angeordnete Reflektor einen Referenzpunkt für die definierte Umschlagposition des Routenzuganhängers an der Übernahmestation dar. Dadurch dass der Reflektor und somit der Referenzpunt direkt an der Übernahmestation angeordnet ist, wird die definierte Umschlagposition immer relativ zu der Übernahmestation angefahren und nicht absolut zu einer Markierung oder einem Magnetstreifen auf der Fahrbahnoberfläche. Die Anordnung des von dem Reflektor gebildeten Referenzpunktes an der Übernahmestation führt weiterhin zu dem Vorteil, dass die definierte Umschlagposition des Routenzuganhängers an der Übernahmestation auch angefahren und gefunden wird, wenn sich die Position der Übernahmestation leicht verändert hat, beispielsweise durch ein Verrutschen.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes System in einer perspektivischen Darstellung,
- Figur 2a: eine Draufsicht auf einen Routenzuganhänger und eine stationäre Übernahmestation in einer ersten Position,
- Figur 2b: die Figur 2a in einer Seitenansicht auf den Routenzuganhänger und die stationäre Übernahmestation,
- Figur 2c: eine schematische Darstellung der Position der Lichtschranken zu dem Reflektor der Figur 2b in Fahrzeuglängsrichtung,
- Figur 3a: eine Draufsicht auf einen Routenzuganhänger und eine stationäre Übernahmestation in einer zweiten Position,
- Figur 3b: die Figur 3a in einer Seitenansicht auf den Routenzuganhänger und die stationäre Übernahmestation,
- Figur 3c: eine schematische Darstellung der Position der Lichtschranken zu dem Reflektor der Figur 3b in Fahrzeuglängsrichtung,
- Figur 4a: eine Draufsicht auf einen Routenzuganhänger und eine stationäre Übernahmestation in einer dritten Position,
- Figur 4b: die Figur 4a in einer Seitenansicht auf den Routenzuganhänger und die stationäre Übernahmestation,
- Figur 4c: eine schematische Darstellung der Position der Lichtschranken zu dem Reflektor der Figur 4b in Fahrzeuglängsrichtung,
- Figur 5a: eine Draufsicht auf einen Routenzuganhänger und eine stationäre Übernahmestation in einer vierten Position,
- Figur 5b: die Figur 5a in einer Seitenansicht auf den Routenzuganhänger und die stationäre Übernahmestation und
- Figur 5c: eine schematische Darstellung der Position der Lichtschranken zu dem Reflektor der Figur 5b in Fahrzeuglängsrichtung,

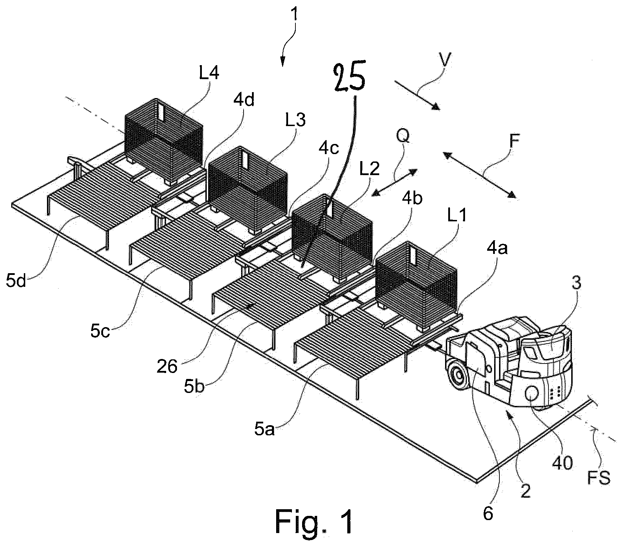

In der Figur 1 ist ein erfindungsgemäßes System 1 dargestellt, das zur Übergabe von Lasten L1-L4 zwischen einem Routenzuganhänger 4a-4d eines Routenzugs 2 und mindestens einer stationären, ortsfesten Übernahmestation 5a-5d besteht.

Das System 1 umfasst einen Routenzug 2, der ein Zugfahrzeug 3 und mindestens einen Routenzuganhänger 4a, 4b, 4c, 4d aufweist, und mindestes eine stationäre Übernahmestation 5a, 5b, 5c, 5d. Zur Übergabe von Lasten L1, L2, L3, L4 zwischen einem der Routenzuganhänger 4a-4d und einer der stationären Übernahmestation 5a-5d befindet sich der entsprechende Routenzuganhänger 4a-4d in einer definierten Umschlagposition relativ zu der entsprechenden stationären Übernahmestation 5a-5d. In der definierten Umschlagposition befindet sich der entsprechende Routenzuganhänger 4a-4d - wie in der Figur 1 dargestellt ist - in einem vorgegebene Abstand seitlich neben der entsprechenden Übernahmestation 5a-5d, so dass die entsprechende Last L1-L4 in seitlicher Richtung Q von dem Routenzuganhänger 4a-4d auf die Übernahmestation 5a-5d bewegt werden kann bzw. von der Übernahmestation 5a-5d auf den Routenzuganhänger 4a-4d bewegt werden kann.

Der Routenzug 2 ist bevorzugt autonom betrieben. Das Zugfahrzeug 3 ist von einem fahrerlosen Schlepper oder einem fahrerlosen Transportsystem gebildet, an den die Routenzuganhänger 4a-4d angehängt sind. Der autonome Routenzug 2 fährt mittels einer geeigneten, nicht näher dargestellten Sensorvorrichtung entlang der Übernahmestationen 5a-5d auf einer Fahrspur FS in einer Fahrtrichtung F.

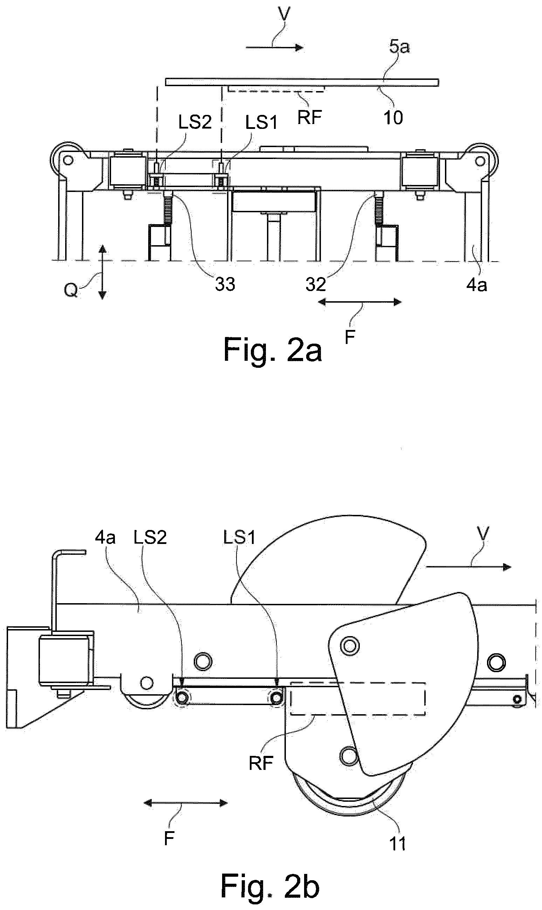

Wie in den Figuren 2a bis 2c dargestellt ist, ist jeder Routenzuganhänger 4a-4d mit einem Positioniersystem versehen, mit dem der entsprechende Routenzuganhänger 4a-4d für die definierte Umschlagposition in Fahrzeuglängsrichtung F an der Übernahmestation 5a-5d positioniert wird. Das erfindungsgemäße Positionersystem wird im Folgenden anhand des Routenzuganhängers 4a und der Übernahmestation 5a beschrieben. Es versteht sich, dass die restlichen Routenzuganhänger 4b, 4c, 4d und die restlichen Übernahmestationen 5b, 5c, 5d mit einem analog aufgebauten Positioniersystem versehen sind.

Das erfindungsgemäße Positioniersystem besteht aus zwei in Fahrzeuglängsrichtung F des Routenzuganhängers 4a voneinander beabstandet am Routenzuganhänger 4a angeordnete Lichtschranken LS1, LS2. Die beiden Lichtschranken LS1, LS2 sind an dem Routenzuganhänger 4a jeweils mit einer in Fahrzeugquerrichtung Q des Routenzuganhängers 4a ausgerichteten Erfassungsrichtung angeordnet. Im dargestellten Ausführungsbeispiel sind die beiden Lichtschranken LS1, LS2 an einer Fahrzeugaußenseite des Routenzuganhängers 4a angeordnet. Das erfindungsgemäße Positioniersystem besteht weiterhin aus einem an der stationären Übernahmestation 5a angeordneten Reflektor RF, der mit den beiden Lichtschranken LS1, LS2 zusammenwirkt. Die Lichtschranken LS1, LS2 stehen mit einer Fahrsteuerung 40 des Routenzugs 2 in Wirkverbindung. Die Fahrsteuerung 40 ist derart ausgebildet, dass mittels der von den beiden Lichtschranken LS1, LS2 an dem Reflektor RF reflektierten Lichtsignale der Routenzuganhänger 4a an der stationären Übernahmestation 5a in der definierten Umschlagposition angehalten wird.

Der Reflektor RF ist an einer dem Routenzuganhänger 4a zugewandten Stirnseite 10 der stationären Übernahmestation 5a angeordnet und erstreckt sich entlang der dem Routenzuganhänger 2 zugewandten Stirnseite 10 der stationären Übernahmestation 5a.

Im dargestellten Ausführungsbeispiel der Figuren 2a, 2b sind die beiden Lichtschranken LS1, LS2 an der in Vorwärtsfahrtrichtung V des Routenzugs 2 linken Seite des Routenzuganhängers 4a angeordnet. Zusätzlich können an der in Vorwärtsfahrtrichtung V des Routenzuganhängers 4a rechten Seite des Routenzuganhängers 4a zwei nicht näher dargestellten Lichtschranken in analoger Weise angeordnet sein.

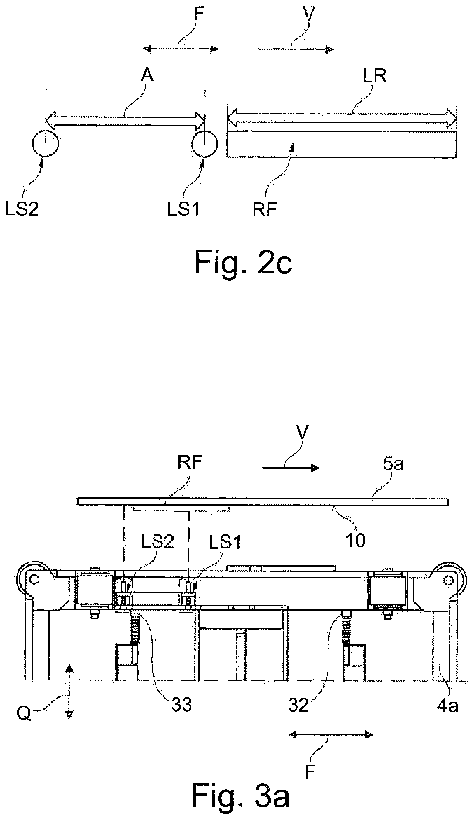

Wie in der Figur 2c dargestellt ist, weist der an der Übernahmestation 5a angeordnete Reflektor RF in Fahrzeuglängsrichtung F des Routenzuganhängers 4a eine Länge LR auf. Die beiden Lichtschranken LS1, LS2 sind an dem Routenzuganhänger 4a in Fahrzeuglängsrichtung F mit dem Abstand A angeordnet. Die Länge LR des Reflektors RF ist hierbei größer als der Abstand A der beiden Lichtschranken LS1, LS1 in Fahrzeuglängsrichtung F des Routenzuganhängers 4a ist. Die Länge LR des Reflektors RF ist maximal 20% größer als der Abstand A der beiden Lichtschranken LS1, LS2 in Fahrzeuglängsrichtung F des Routenzuganhängers 4a ist. Im dargestellten Ausführungsbeispiel beträgt beispielsweise der Abstand A der beiden Lichtschranken LS1, LS2 180mm und die Länge LR des Reflektors RF 200mm.

Die Lichtschranken LS1, LS2 sind jeweils als Reflexionslichtschranken ausgebildet, die einen Lichtstrahlensender und einen Lichtstrahlenempfängersensor aufweisen. Der Lichtstrahlensender der entsprechenden Lichtschranke LS1 bzw. LS2 sendet hierbei einen in Fahrzeugquerrichtung Q orientierten horizontalen Lichtstrahl aus, der in der Figur 2a mit einer gestrichelt dargestellten Linie verdeutlicht ist. Gelangt der Reflektor RF an der Übernahmestation 5a in den Erfassungsbereich und somit das Sichtfeld der entsprechenden Lichtschranke LS1 bzw. LS2, wird der von dem Lichtstrahlensender ausgesendete Lichtstrahl an dem Reflektor RF reflektiert und von dem Lichtstrahlenempfängersensor der entsprechenden Lichtschranke LS1 bzw. LS2 empfangen. Die entsprechende Lichtschranke LS1 bzw. LS2 ist somit dunkel geschaltet, wenn der ausgesendete Lichtstrahl nicht von dem Reflektor RF reflektiert wird. Die entsprechende Lichtschranke LS1 bzw. LS2 schaltet somit hell, sobald der ausgesendete Lichtstrahl von dem Reflektor RF reflektiert und von dem Lichtstrahlenempfängersensor empfangen wird.

Bei dem erfindungsgemäßen System 1 weist das Zugfahrzug 3 - wie in der Figur 1 dargestellt ist - ein batterie-elektrisches Antriebssystem mit einem elektrischen Fahrantrieb auf, wobei das Zugfahrzeug 3 eine Batterie 6, die vorzugsweise als Traktionsbatterie ausgebildet ist, aufweist, die den Fahrantrieb des Zugfahrzeugs 3 versorgt.

Die Routenzuganhänger 4a-4d weisen jeweils ein Fahrwerk 11 auf, mit dem sich die Routenzuganhänger 4a-4d auf der Fahrbahn abstützen.

Jeder Routenzuganhänger 4a-4d kann - wie in der Figur 1 dargestellt ist - zur Lastübergabe mit einer elektromotorisch angetriebenen Fördereinrichtung 25 versehen sein. Die Fördereinrichtung 25 kann beispielsweise als elektromotorisch angetriebene Rollenbahn ausgebildet sein.

Weiterhin kann jede Übernahmestation 5a-5d zur Lastübergabe mit einer elektromotorisch angetriebenen Fördereinrichtung 26 versehen sein. Die Fördereinrichtung 26 kann beispielsweise als elektromotorisch angetriebene Rollenbahn ausgebildet sein.

Die Fördereinrichtung 25 der Routenzuganhänger 4a-4d und die Fördereinrichtung 26 der Übernahmestation 5a-5d sind bevorzugt in der definierten Umschlagposition von einer gemeinsamen Stromquelle angetrieben. Im dargestellten Ausführungsbeispiel wird hierzu die Batterie 6 des Routenzugs 2 genutzt. Um die Fördereinrichtung 26 der Übernahmestation 5a-5d in der definierten Umschlagposition mit Strom aus der Batterie 6 des Routenzugs 2 versorgen zu können, ist jede Übernahmestation 5a-5d mit nicht näher dargestellten Stromkontakten versehen, die mit Stromkontakten 32, 33 an den Routenzuganhängern 4a-4d in Verbindung bringbar sind. Die Stromkontakte 32, 33 an den Routenzuganhängern 4a-4d stehen zur Stromversorgung mit der Batterie 6 des Routenzugs 2 in Verbindung.

In der Figur 1 ist die definierte Umschlagposition zwischen dem Routenzuganhänger 4a-4d und der Übernahmestation 5a-5d dargestellt. Die Routenzuganhänger 4a-4d befindet sich in der definierten Umschlagposition mittig neben den Übernahmestationen 5a-5d.

Um die Routenzuganhänger 4a-4d in der definierten Umschlagposition an der Übernahmestation 5a-5d in Fahrzeuglängsrichtung F anzuhalten, wird erfindungsgemäß das aus den beiden Lichtschranken LS1, LS2 an den Routenzuganhängern 4a-4d und dem Reflektor RF an den Übernahmestationen 5a-5d bestehende Positioniersystem verwendet. Die Funktion des erfindungsgemäßen Positioniersystems wird im Folgenden anhand der Figuren 2a bis 5c näher beschrieben.

Die Figuren 2a bis 2c zeigen eine erste Position, in der der Routenzuganhänger 4a in Vorwärtsfahrtrichtung V mit einer definierten Fahrgeschwindigkeit auf der Fahrspur FS auf die Übernahmestation 5a zufährt. Der Reflektor RF befindet sich noch vor den beiden Lichtschranken LS1, LS2, so dass beide Lichtschranken LS1, LS2 dunkel geschaltet sind.

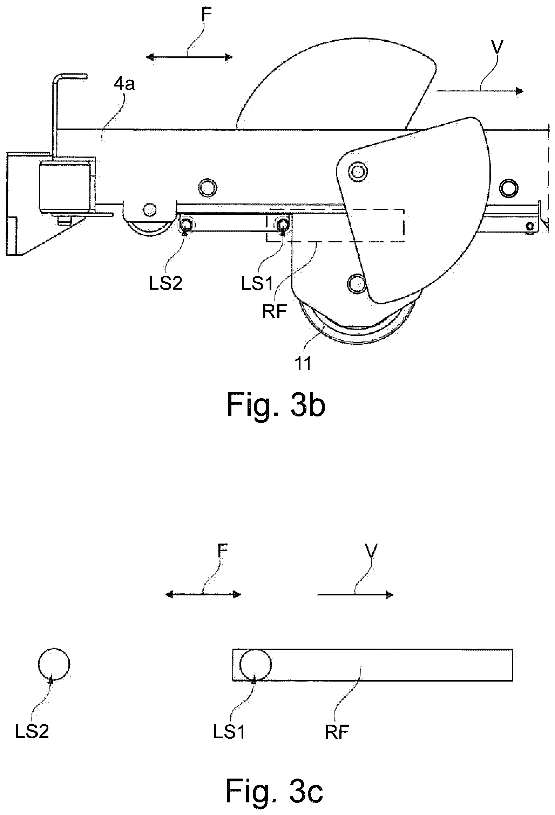

Die Figuren 3a bis 3c zeigen eine zweite Position, in der der Routenzuganhänger 4a gegenüber den Figuren 2a bis 2c weiter in Vorwärtsfahrtrichtung V verfahren ist. In den Figuren 3a bis 3c gelangt der Reflektor RF in den Erfassungsbereich der in Fahrtrichtung V vorne liegenden ersten Lichtschranke LS1, so dass die erste Lichtschranke LS1 hell geschaltet wird. Die in Vorwärtsfahrtrichtung V hinten liegende zweite Lichtschranke LS2 hat den Reflektor RF noch nicht erreicht und ist weiterhin dunkel geschaltet. Bei Erfassen des an dem Reflektor RF reflektierten Lichtsignals der ersten, in Fahrtrichtung V des Routenzugs 2 vorne liegenden Lichtschranke LS1 und somit bein Hellschalten der Lichtschranke LS1 wird von der Fahrsteuerung 40 die Fahrgeschwindigkeit des Routenzugs 2 reduziert, so dass der Routenzug 2 mit reduzierter Fahrgeschwindigkeit weiter in Fahrtrichtung V fährt.

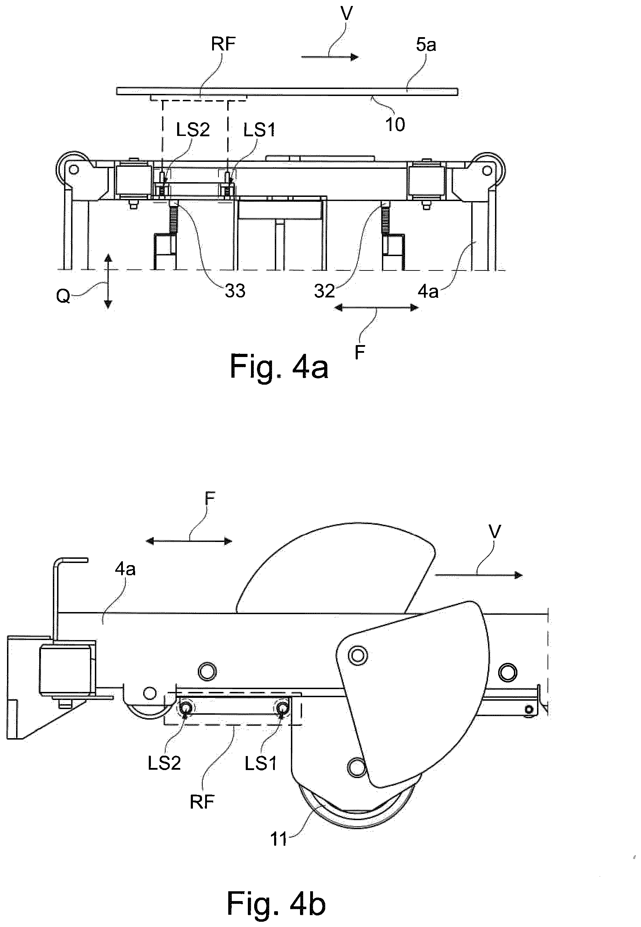

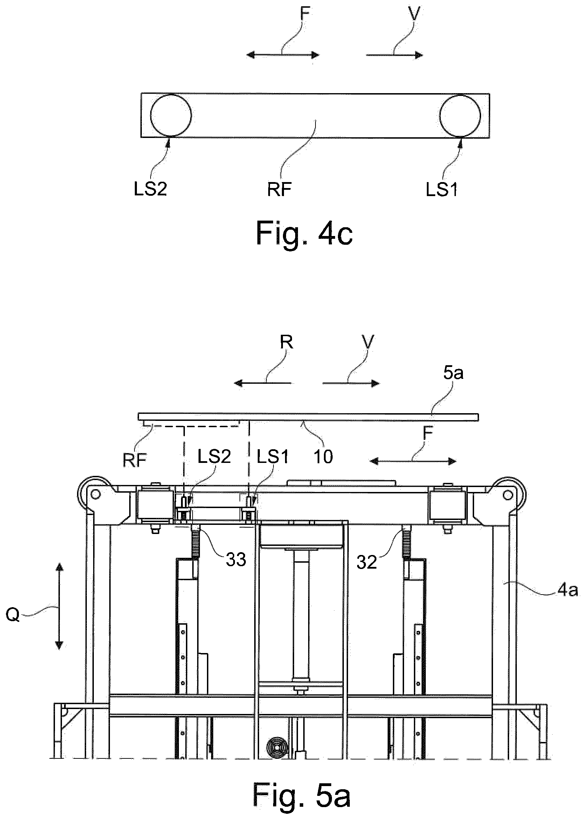

Die Figuren 4a bis 4c zeigen eine dritte Position, in der der Routenzuganhänger 4a gegenüber den Figuren 3a bis 3c mit der reduzierten Fahrgeschwindigkeit weiter in Vorwärtsfahrtrichtung V verfahren ist. In den Figuren 4a bis 4c gelangt der Reflektor RF in den Erfassungsbereich der in Fahrtrichtung V hinten liegenden zweiten Lichtschranke LS2, so dass weiterhin die zweite Lichtschranke LS2 hell geschaltet wird. In den Figuren 4a bis 4c sind somit beide Lichtschranken LS1, LD2 hell geschaltet. Bei Erfassen des an dem Reflektor RF reflektierten Lichtsignals der zweiten, in Fahrtrichtung V des Routenzugs 2 hinten liegenden Lichtschranke LS2 und somit beim zusätzlichen Hellschalten der Lichtschranke LS2 wird von der Fahrsteuerung 40 der Routenzug 2 in den Stillstand abgebremst. Die Position der Figuren 4a bis 4c, in denen beide Lichtschranken LS1, LS2 vor dem Reflektor RF stehen und hell geschaltet sind, entspricht hierbei der definierten Umschlagposition des Routenzuganhängers 4a an der Übernahmestation 5a. Der Routenzug 2 wird somit ausgehend von den Figuren 3a bis 3b nach dem Hellschalten der in Fahrtrichtung V vorne liegenden Lichtschranke LS1 solange mit reduzierter Fahrgeschwindigkeit weiterverfahren, bis die in Fahrtrichtung V hinten liegende Lichtschranke S2 ebenfalls hell geschaltet wird, was zum Stoppen des Routenzugs 2 führt.

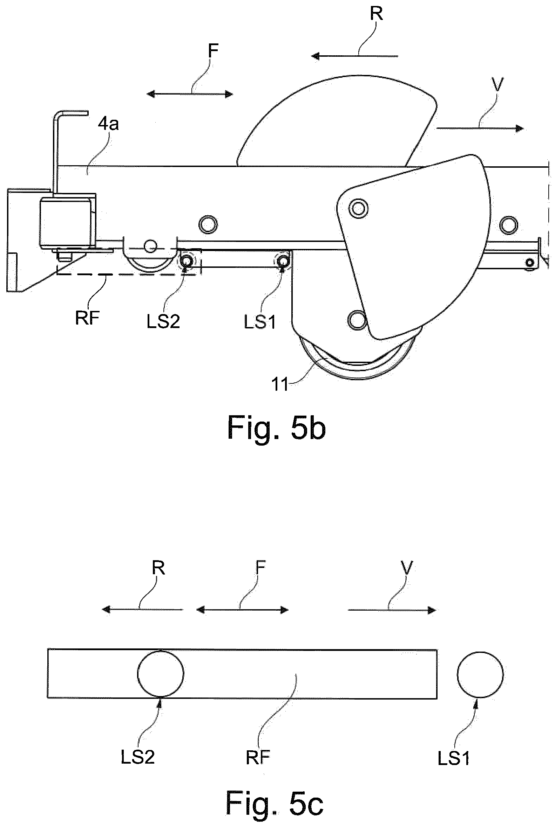

Sofern sich nach dem Hellschalten der zweiten Lichtschranke LS2 (Figuren 4a-4c) der Bremsweg des Routenzuganhängers 4a aufgrund äußerer Einflüsse oder Verschleiß derart verlängert, dass die erste, in Fahrtrichtung des Routenzugs 2 vorne liegenden Lichtschranke LS1 über den Reflektor RF an der Übernahmestation 5a hinaus fährt, gelangt der Routenzuganhänger 4a in eine in den Figuren 5a bis 5b dargestellte vierte Position. In den Figuren 5a bis 5c ist die erste Lichtschranke LS1 dunkel geschaltet und die zweite Lichtschranke LS2 hell geschaltet. Durch die in Fahrzeuglängsrichtung F des Routenzuganhängers 4a beabstandete Anordnung der beiden Lichtschranken LS1, LS2 und die Reihenfolge der von den beiden Lichtschranken LS1, LS2 empfangenen reflektierten Lichtsignale kann hierbei von der Fahrsteuerung 40 die Fahrtrichtung V des Routenzuganhängers 4a bestimmt werden, mit welcher der Routenzuganhänger 4a die Übernahmestation 5a anfährt und dementsprechend von der Fahrsteuerung 40 die entsprechende entgegengesetzte Rückwärtsfahrtrichtung R bestimmt werden, in welcher der Routenzuganhänger 4a korrigiert werden muss, falls die Lichtschranke LS1 beim Stoppen des Routenzugs 2 über den an der Übernahmestation 5a angeordneten Reflektor RF hinausfährt. Von der Fahrtsteuerung 40 wird ausgehend von der Position der Figure 5a-5c der Routenzuganhänger 4a in Rückwärtsfahrtrichtung R verfahren, bis beide Lichtschranken LS1, LS2 vor dem Reflektor RF stehen und hell geschaltet sind und somit die definierte Umschlagposition des Routenzuganhängers 4a an der Übernahmestation 5a erreicht ist.

Wurde der Routenzuganhänger 4a-4d an einer entsprechenden Übernahmestation 5a-5d in der definierten Umschlagposition angehalten, können die Stromkontakte 32, 33 des Routenzuganhängers 4a-4d mit den Stromkontakten an der Übernahmestation 5a-5d kontaktiert werden, so dass die Fördereinrichtung 25 des Routenzuganhängers 4a-4d und die Fördereinrichtung 26 der Übernahmestation 5a-5d betrieben werden können und dadurch die Last L1-L4 von dem Routenzuganhänger 4a-4b auf die Übernahmestation 5a-5d bzw. von der Übernahmestation 5a-5d auf den Routenzuganhänger 4a-4b übergeben werden kann.

## Patentansprüche

1. System (1) umfassend einen Routenzug (2), der ein Zugfahrzeug (3) und mindestens einen Routenzuganhänger (4a; 4b; 4c; 4d) aufweist, und mindestes eine stationäre Übernahmestation (5a; 5b; 5c; 5d) zur Übergabe von Lasten (L1; L2; L3; L4) zwischen dem Routenzuganhänger (4a; 4b; 4c; 4d) und der stationären Übernahmestation (5a; 5b; 5c; 5d), wobei sich der Routenzuganhänger (4a; 4b; 4c; 4d) zur Lastübergabe in einer definierten Umschlagposition relativ zur stationären Übernahmestation (5a; 5b; 5c; 5d) befindet, **dadurch gekennzeichnet, dass** der Routenzuganhänger (4a; 4b; 4c; 4d) zwei in Fahrzeuglängsrichtung (F) des Routenzuganhängers (4a; 4b; 4c; 4d) voneinander beabstandet angeordnete Lichtschranken (LS1, LS2) aufweist, die an dem Routenzuganhänger (4a; 4b; 4c; 4d) jeweils mit einer in Querrichtung (Q) des Routenzuganhängers (4a; 4b; 4c; 4d) ausgerichteten Erfassungsrichtung angeordnet sind, und die stationäre Übernahmestation (5a; 5b; 5c; 5d) mit einem mit den Lichtschranken (LS1, LS2) zusammenwirkender Reflektor (RF) versehen ist, wobei die Lichtschranken (LS1, LS2) mit einer Fahrsteuerung (40) des Routenzugs (2) in Wirkverbindung stehen und die Fahrsteuerung (40) derart ausgebildet ist, dass mittels der von den Lichtschranken (LS1, LS2) an dem Reflektor (RF) reflektierten Lichtsignale der Routenzuganhänger (4a; 4b; 4c; 4d) an der stationären Übernahmestation (5a; 5b; 5c; 5d) in der definierten Umschlagposition angehalten wird.

2. System nach Anspruch 1, **dadurch gekennzeichnet, dass** der Reflektor (RF) an einer dem Routenzuganhänger (4a; 4b; 4c; 4d) zugewandten Stirnseite (10) der stationären Übernahmestation (5a; 5b; 5c; 5d) angeordnet ist und sich entlang der dem Routenzuganhänger (4a; 4b; 4c; 4d) zugewandten Stirnseite (10) der stationären Übernahmestation (5a; 5b; 5c; 5d) erstreckt.

3. System nach Anspruch 1 oder 2, **dadurch gekennzeichnet, dass** die Länge (LR) des Reflektors (RF) größer als der Abstand (A) der beiden Lichtschranken (LS1, LS2) in Fahrzeuglängsrichtung (F) des Routenzuganhängers (4a; 4b; 4c; 4d) ist.

4. System nach Anspruch 3, **dadurch gekennzeichnet, dass** die Länge (LR) des Reflektors (RF) maximal 20% größer als der Abstand (A) der beiden Lichtschranken (LS1, LS2) in Fahrzeuglängsrichtung (F) des Routenzuganhängers (4a; 4b; 4c; 4d) ist.

5. System nach einem der Ansprüche 1 bis 4, **dadurch gekennzeichnet, dass** die Lichtschranken (LS1, LS2) jeweils als Reflexionslichtschranke ausgebildet sind, die einen Lichtstrahlensender und einen Lichtstrahlenempfängersensor aufweisen.

6. System nach einem der Ansprüche 1 bis 5, **dadurch gekennzeichnet, dass** an der in Fahrtrichtung (V) des Routenzuganhängers (4a; 4b; 4c; 4d) linken Seite und rechten Seite des Routenzuganhängers (4a; 4b; 4c; 4d) jeweils zwei Lichtschranken angeordnet sind.

7. System nach einem der Ansprüche 1 bis 6, **dadurch gekennzeichnet, dass** die Fahrsteuerung (40) derart ausgebildet ist, dass bei Erfassen des an dem Reflektor (RF) reflektierten Lichtsignals der ersten, in Fahrtrichtung (V) des Routenzugs (2) vorne liegenden Lichtschranke (LS1) die Fahrgeschwindigkeit des Routenzugs (2) reduziert wird.

8. System nach Anspruch 7, **dadurch gekennzeichnet, dass** die Fahrsteuerung (40) derart ausgebildet ist, dass bei Erfassen des an dem Reflektor (RF) reflektierten Lichtsignals der zweiten, in Fahrtrichtung (F) des Routenzugs (2) hinten liegenden Lichtschranke (LS2) der Routenzug (2) in den Stillstand abgebremst wird.

9. System nach Anspruch 8, **dadurch gekennzeichnet, dass** die Fahrsteuerung (40) derart ausgebildet ist, dass bei Nicht-Erfassen des an dem Reflektor (RF) reflektierten Lichtsignals der ersten, in Fahrtrichtung (V) des Routenzugs (2) vorne liegenden Lichtschranke (LS1) eine Korrektur der Position des Routenzugs (2) durch eine Rückwärtsfahrt (R) des Routenzugs (2) erfolgt, bis von beiden Lichtschranken (LS1, LS2) ein an dem Reflektor (RF) reflektiertes Lichtsignal erfasst wird.

10. System nach einem der Ansprüche 1 bis 9, **dadurch gekennzeichnet, dass** der Routenzug (2) autonom betrieben ist.

11. System nach einem der Ansprüche 1 bis 10, **dadurch gekennzeichnet, dass** der Routenzuganhänger (4a; 4b; 4c; 4d) und/oder die Übernahmestation (5a; 5b; 5c; 5d) eine Fördereinrichtung (25; 26) zur Lastübergabe einer Last (L1; L2; L3; L4) aufweist.

12. Verfahren zum Betrieb eines Systems (1) nach einem der vorangegangenen Ansprüche, **dadurch gekennzeichnet, dass** von dem Routenzug (2) mit einer vorgegebenen Fahrgeschwindigkeit die stationäre Übernahmestation (5a; 5b; 5c; 5d) angefahren wird, bei Erfassen des an dem Reflektor (RF) reflektierten Lichtsignals der ersten, in Fahrtrichtung (V) des Routenzugs (2) vorne liegenden Lichtschranke (LS1) die Fahrgeschwindigkeit des Routenzugs (2) reduziert wird und bei zusätzlichem Erfassen des an dem Reflektor (RF) reflektierten Lichtsignals der zweiten, in Fahrtrichtung (V) des Routenzugs (2) hinten liegenden Lichtschranke (LS2) der Routenzug (2) in den Stillstand abgebremst wird.

13. Verfahren nach Anspruch 12, **dadurch gekennzeichnet, dass** bei Nicht-Erfassen des an dem Reflektor (RF) reflektierten Lichtsignals der ersten, in Fahrtrichtung (V) des Routenzugs (2) vorne liegenden Lichtschranke (LS1) eine Korrektur der Position des Routenzugs (2) durch eine Rückwärtsfahrt (R) des Routenzugs (2) erfolgt, bis von beiden Lichtschranken (LS1, LS2) ein an dem Reflektor (RF) reflektiertes Lichtsignal erfasst wird.

## Claims

1. System (1) comprising a tugger train (2), which has a towing vehicle (3) and at least one tugger train trailer (4a; 4b; 4c; 4d), and at least one stationary transfer station (5a; 5b; 5c; 5d) for transferring loads (L1; L2; L3; L4) between the tugger train trailer (4a; 4b; 4c; 4d) and the stationary transfer station (5a; 5b; 5c; 5d), wherein the tugger train trailer (4a; 4b; 4c; 4d) for load transfer is in a defined handling position relative to the stationary transfer station (5a; 5b; 5c; 5d), **characterized in that** the tugger train trailer (4a; 4b; 4c; 4d) has two light barriers (LS1, LS2) which are arranged at a distance from each other in the vehicle longitudinal direction (F) of the tugger train trailer (4a; 4b; 4c; 4d) and are arranged on the tugger train trailer (4a; 4b; 4c; 4d) each with a detection direction oriented in the transverse direction (Q) of the tugger train trailer (4a; 4b; 4c; 4d), and the stationary transfer station (5a; 5b; 5c; 5d) is provided with a reflector (RF) that interacts with the light barriers (LS1, LS2), wherein the light barriers (LS1, LS2) are operatively connected to a drive controller (40) of the tugger train (2) and the drive controller (40) is configured such that the light signals that are reflected by the light barriers (LS1, LS2) at the reflector (RF) are used to stop the tugger train trailer (4a; 4b; 4c; 4d) at the stationary transfer station (5a; 5b; 5c; 5d) in the defined handling position.

2. System according to Claim 1, **characterized in that** the reflector (RF) is arranged on an end face (10) of the stationary transfer station (5a; 5b; 5c; 5d) facing the tugger train trailer (4a; 4b; 4c; 4d) and extends along the end face (10) of the stationary transfer station (5a; 5b; 5c; 5d) facing the tugger train trailer (4a; 4b; 4c; 4d) .

3. System according to Claim 1 or 2, **characterized in that** the length (LR) of the reflector (RF) is greater than the distance (A) between the two light barriers (LS1, LS2) in the vehicle longitudinal direction (F) of the tugger train trailer (4a; 4b; 4c; 4d).

4. System according to Claim 3, **characterized in that** the length (LR) of the reflector (RF) is at most 20% greater than the distance (A) between the two light barriers (LS1, LS2) in the vehicle longitudinal direction (F) of the tugger train trailer (4a; 4b; 4c; 4d).

5. System according to one of Claims 1 to 4, **characterized in that** the light barriers (LS1, LS2) are each configured as a reflection light barrier having a light beam transmitter and a light beam receiver sensor.

6. System according to one of Claims 1 to 5, **characterized in that** two light barriers are respectively arranged on the left-hand and right-hand sides of the tugger train trailer (4a; 4b; 4c; 4d) in the direction of travel (V) of the tugger train trailer (4a; 4b; 4c; 4d).

7. System according to one of Claims 1 to 6, **characterized in that** the drive controller (40) is configured in such a way that, when the light signal from the first light barrier (LS1) located at the front in the direction of travel (V) of the tugger train (2), which is reflected at the reflector (RF), is detected, the driving speed of the tugger train (2) is reduced.

8. System according to Claim 7, **characterized in that** the drive controller (40) is configured in such a way that, when the light signal from the second light barrier (LS2) located at the rear in the direction of travel (F) of the tugger train (2), which is reflected at the reflector (RF), is detected, the tugger train (2) is decelerated to a standstill.

9. System according to Claim 8, **characterized in that** the drive controller (40) is configured in such a way that, when the light signal from the first light barrier (LS1) located at the front in the direction of travel (V) of the tugger train (2), which is reflected at the reflector (RF), is not detected, the position of the tugger train (2) is corrected by reversing (R) the tugger train (2) until both light barriers (LS1, LS2) detect a light signal reflected at the reflector (RF).

10. System according to one of Claims 1 to 9, **characterized in that** the tugger train (2) is operated autonomously.

11. System according to one of Claims 1 to 10, **characterized in that** the tugger train trailer (4a; 4b; 4c; 4d) and/or the transfer station (5a; 5b; 5c; 5d) has a conveyor (25; 26) for transferring a load (L1; L2; L3; L4).

12. Method for operating a system (1) according to one of the preceding claims, **characterized in that** the tugger train (2) approaches the stationary transfer station (5a; 5b; 5c; 5d) at a predefined driving speed, when the light signal from the first light barrier (LS1) located at the front in the direction of travel (V) of the tugger train (2), which is reflected at the reflector (RF), is detected, the driving speed of the tugger train (2) is reduced and, when the light signal from the second light barrier (LS2) located at the rear in the direction of travel (V) of the tugger train (2), which is reflected at the reflector (RF), is additionally detected, the tugger train (2) is decelerated to a standstill.

13. Method according to Claim 12, **characterized in that**, when the light signal from the first light barrier (LS1) located at the front in the direction of travel (V) of the tugger train (2), which is reflected at the reflector (RF), is not detected, the position of the tugger train (2) is corrected by reversing (R) the tugger train (2) until both light barriers (LS1, LS2) detect a light signal reflected at the reflector (RF).

## Revendications

1. Système (1) comprenant un chariot tracteur (2), qui comporte un véhicule de traction (3) et au moins une remorque (4a ; 4b ; 4c ; 4d) de chariot tracteur, et au moins une station de transfert fixe (5a ; 5b ; 5c ; 5d) destinée à transférer des charges (L1 ; L2 ; L3 ; L4) entre la remorque (4a ; 4b ; 4c ; 4d) de chariot tracteur et la station de transfert fixe (5a ; 5b ; 5c ; 5d), la remorque (4a ; 4b ; 4c ; 4d) de chariot tracteur se trouvant pour le transfert de charges dans une position de transbordement définie par rapport à la station de transfert fixe (5a ; 5b ; 5c ; 5d), **caractérisé en ce que** la remorque (4a ; 4b ; 4c ; 4d) de chariot tracteur comporte deux barrières lumineuses (LS1, LS2) disposées à distance l'une de l'autre dans un sens longitudinal de véhicule (F) de la remorque (4a ; 4b ; 4c ; 4d) de chariot tracteur, qui sont chacune disposées sur la remorque (4a ; 4b ; 4c ; 4d) de chariot tracteur avec une direction de détection orientée dans le sens transversal (Q) de la remorque (4a ; 4b ; 4c ; 4d) de chariot tracteur, et la station de transfert fixe (5a ; 5b ; 5c ; 5d) est pourvue d'un réflecteur (RF) coopérant avec les barrières lumineuses (LS1, LS2), les barrières lumineuses (LS1, LS2) étant reliées de manière fonctionnelle à une commande de conduite (40) du chariot tracteur (2) et la commande de conduite (40) étant réalisée de telle manière que la remorque (4a ; 4b ; 4c ; 4d) de chariot tracteur est arrêtée dans la position de transbordement définie sur la station de transfert fixe (5a ; 5b ; 5c ; 5d) au moyen des signaux lumineux réfléchis sur le réflecteur (RF) par les barrières lumineuses (LS1, LS2).

2. Système selon la revendication 1, **caractérisé en ce que** le réflecteur (RF) est disposé sur un côté frontal (10) de la station de transfert fixe (5a ; 5b ; 5c ; 5d) tourné vers la remorque (4a ; 4b ; 4c ; 4d) de chariot tracteur et s'étend le long du côté frontal (10) de la station de transfert fixe (5a ; 5b ; 5c ; 5d) tourné vers la remorque (4a ; 4b ; 4c ; 4d) de chariot tracteur.

3. Système selon la revendication 1 ou 2, **caractérisé en ce que** la longueur (LR) du réflecteur (RF) est supérieure à la distance (A) entre les deux barrières lumineuses (LS1, LS2) dans le sens longitudinal de véhicule (F) de la remorque (4a ; 4b ; 4c ; 4d) de chariot tracteur.

4. Système selon la revendication 3, **caractérisé en ce que** la longueur (LR) du réflecteur (RF) est au maximum 20 % plus grande que la distance (A) entre les deux barrières lumineuses (LS1, LS2) dans le sens longitudinal de véhicule (F) de la remorque (4a ; 4b ; 4c ; 4d) de chariot tracteur.

5. Système selon l'une des revendications 1 à 4, **caractérisé en ce que** les barrières lumineuses (LS1, LS2) sont réalisées chacune comme une barrière lumineuse réfléchissante, qui comporte un émetteur de faisceaux de lumière et un capteur de récepteur de faisceaux de lumière.

6. Système selon l'une des revendications 1 à 5, **caractérisé en ce que** deux barrières lumineuses sont disposées chacune sur le côté gauche et le côté droit de la remorque (4a ; 4b ; 4c ; 4d) de chariot tracteur dans le sens de marche (V) de la remorque (4a ; 4b ; 4c ; 4d) de chariot tracteur.

7. Système selon l'une des revendications 1 à 6, **caractérisé en ce que** la commande de conduite (40) est réalisée de telle manière que la vitesse de déplacement du chariot tracteur (2) est réduite lors de la détection du signal lumineux réfléchi sur le réflecteur (RF) de la première barrière lumineuse (LS1) située à l'avant dans le sens de marche (V) du chariot tracteur (2).

8. Système selon la revendication 7, **caractérisé en ce que** la commande de conduite (40) est réalisée de telle manière que le chariot tracteur (2) est freiné jusqu'à l'arrêt lors de la détection du signal lumineux réfléchi sur le réflecteur (RF) de la deuxième barrière lumineuse (LS2) située à l'arrière dans le sens de marche (F) du chariot tracteur (2).

9. Système selon la revendication 8, **caractérisé en ce que** la commande de conduite (40) est réalisée de telle manière qu'une correction de la position du chariot tracteur (2) est effectuée par une marche arrière (R) du chariot tracteur (2) en cas de non-détection du signal lumineux réfléchi sur le réflecteur (RF) de la première barrière lumineuse (LS1) située à l'avant dans le sens de marche (V) du chariot tracteur (2) jusqu'à ce qu'un signal lumineux réfléchi sur le réflecteur (RF) soit détecté par les deux barrières lumineuses (LS1, LS2).

10. Système selon l'une des revendications 1 à 9, **caractérisé en ce que** le chariot tracteur (2) fonctionne de manière autonome.

11. Système selon l'une des revendications 1 à 10, **caractérisé en ce que** la remorque (4a ; 4b ; 4c ; 4d) de chariot tracteur et/ou la station de transfert (5a ; 5b ; 5c ; 5d) comportent un dispositif de convoyage (25 ; 26) pour le transfert d'une charge (L1 ; L2 : L3 ; L4).

12. Procédé destiné à faire fonctionner un système (1) selon l'une des revendications précédentes, **caractérisé en ce que** la station de transfert fixe (5a ; 5b ; 5c ; 5d) est abordée par le chariot tracteur (2) à une vitesse de conduite prédéfinie, la vitesse de conduite du chariot tracteur (2) est réduite lors de la détection du signal lumineux réfléchi sur le réflecteur (RF) de la première barrière lumineuse (LS1) située à l'avant dans le sens de marche (V) du chariot tracteur (2), et le chariot tracteur (2) est freiné jusqu'à l'arrêt lors de la détection supplémentaire du signal lumineux réfléchi sur le réflecteur (RF) de la deuxième barrière lumineuse (LS2) située à l'arrière dans le sens de marche (V) du chariot tracteur (2).

13. Système selon la revendication 12, **caractérisé en ce qu'**une correction de la position du chariot tracteur (2) est effectuée par une marche arrière (R) du chariot tracteur (2) en cas de non-détection du signal lumineux réfléchi sur le réflecteur (RF) de la première barrière lumineuse (LS1) située à l'avant dans le sens de marche (V) du chariot tracteur (2) jusqu'à ce qu'un signal lumineux réfléchi sur le réflecteur (RF) soit détecté par les deux barrières lumineuses (LS1, LS2).
